# EUROPEAN PATENT APPLICATION

(11) **EP 4 850 782 A1**
(43) Date of publication of application: **09.12.2026**
(21) Application number: 25223384.6
(22) Date of filing: 15.12.2025
(51) Int. Cl.: B01D 46/00, B01D 46/42, B01D 46/46

(54) **REMOTE ANOMALY-MONITORING AND INDICATOR-LIGHT-BASED ALERTING DEVICE FOR FILTRATION EQUIPMENT**

(30) Priority: 02.06.2025 TW 114205598 U
(71) Applicant: Air-O-Filter Environment System, Inc., Taichung City 42949 (TW)
(72) Inventor: WANG, Alpha, 42949 Taichung City (TW)
(74) Representative: Viering, Jentschura & Partner mbB Patent- und Rechtsanwälte

(57) **Abstract**

A remote anomaly-monitoring and indicator-light-based alerting device for filtration equipment essentially includes a filter screen, a sensing module, a control unit, an LED display unit, a communication module, and an I/O output interface. The sensing module is provided at the filter screen and various locations within the equipment to detect an anomaly parameter, e.g., a pressure difference, a temperature, or a current. The control unit makes a determination according to the sensing data and, upon determining that an anomaly has occurred, drives the LED display unit to emit light corresponding to the anomaly. The control unit can also simultaneously transmit an anomaly message through the communication module to a mobile device or computer device or send a control signal through the I/O output interface to external equipment, thereby achieving real-time anomaly alert and automated response control. The device advantageously features multi-point sensor distribution, remote notification, graphical alert, and modular application.

## Description

### BACKGROUND OF THE INVENTION

### 1. Technical Field

The present invention relates to a state-monitoring device for filtration equipment. More particularly, the invention relates to a monitoring and alerting structure that can identify a filter screen anomaly in real time, indicate the anomaly with an indicator light, and transmit an anomaly message through a communication module to a remote device.

### 2. Description of Related Art

Generally speaking, conventional oil mist recovery equipment or air filtration equipment typically relies on its user to replace or clean its filter screen on a regular basis and does not have the function of monitoring the state of the filter screen in real time. While some prior art has incorporated pressure-difference sensors and light-emitting diode (LED) indicator light modules for indicating whether a filter screen is clogged or not (e.g., with green light indicating normal operation, yellow light indicating a need for cleaning, and red light indicating severe obstruction), the monitoring and alerting functions are confined to the body of the equipment and cannot notify a remote operator in real time of the anomaly detected.

Besides, it has been proposed to convert the abnormal state of a filter screen into a signal output and connect the output to a computer numerical control (CNC) system or smart device in order to expand the monitoring application. However, such techniques mostly stay in the concept disclosure stage and lack a specific description of details concerning the connecting architecture of their communication modules, their data transfer processes, the display logic of their remote receiving devices, their simultaneous graphical alerts to multiple devices, and so on. Moreover, the general lack of a modular design in these techniques hinders extensive application to different types of filtration equipment.

Therefore, there is still a need for an innovative device that can sense the state of a filter screen in real time, that incorporates a communication module for transmitting anomaly information to a remote operator or device, that allows the display of alerts on multiple devices, and that has the application flexibility of a modular design, so as to enhance the efficiency of smart monitoring and the convenience of equipment maintenance management.

### BRIEF SUMMARY OF THE INVENTION

In view of the fact that the existing filtration equipment with pressure difference sensing and LED indicator light display functions is still unable to notify a remote operator effectively in real time for maintenance or other operations, and that the communication and remote receiving mechanisms involved have yet to be fully disclosed, the primary objective of the present invention is to provide a remote anomaly-monitoring and indicator-light-based alerting device for filtration equipment, wherein the structure of the device is provided with a communication module and a remote receiving module that can transmit the information of equipment anomaly to a computer, a mobile device, or a control system in real time to shorten the response time for maintenance and increase the efficiency of anomaly identification.

Another objective of the present invention is to provide a monitoring device that has expandability and modular application flexibility, and whose communication module supports simultaneous transmission to multiple devices and is integrated with a graphical anomaly-alerting interface so that a remote user can clearly identify the level of an anomaly. This monitoring device is suitable for use in a multi-machine management environment and an automated production line.

Yet another objective of the present invention is to provide a filter-screen state monitoring module whose sensing items can be expanded (e.g., to include ambient temperature, voltage, current, and working hours) and that can record the usage history of a filter screen as a basis for making maintenance schedules and tracking anomalies, thereby facilitating the introduction of a maintenance management mechanism into a smart factory.

To achieve the foregoing objectives, the structure of the present invention includes a filter-screen state monitoring module having a remote anomaly-alerting function for use in oil mist recovery equipment. The filter-screen state monitoring module having a remote anomaly-alerting function includes a sensing module, a control unit, a display unit, a communication module, and a remote receiving module. The sensing module senses the pressure difference across a filter screen and outputs the corresponding information to the control unit for judgment. When an anomaly occurs, the control unit drives an LED indicator light to emit the corresponding light. In addition, the control unit simultaneously transmits anomaly information through the communication module to the remote receiving module to notify a user in real time, in order for the user to address the abnormal state of the equipment.

It can be known from the above that the present invention has the following features and effects:
1. The present invention can monitor the abnormal state of a filter screen in real time to enhance the safety of use and maintenance efficiency of equipment;
2. The present invention can simultaneously transmit anomaly information through a Wi-Fi module to a remote device to facilitate reduced-manning and automated production line management;
3. The present invention incorporates graphical anomaly-alerting images so that a user can rapidly identify an anomaly and its level of severity;
4. The present invention allows the sensing items to be expanded to include working hours and environmental parameters, thereby providing a basis for developing maintenance schedules and tracking anomalies; and
5. The present invention uses a modular design and is therefore suitable for use with various types of filtration equipment, featuring wide applicability and ease of installation.

### BRIEF DESCRIPTION OF THE SEVERAL VIEWS OF THE DRAWINGS

FIG. 1 schematically shows the overall architecture of the present invention.
FIG. 2 is a sectional view of the internal structure of a piece of filtration equipment according to the present invention.
FIG. 3 shows a scenario of use in which the present invention is applied to a CNC machine.
FIG. 4 schematically shows how the present invention pushes an anomaly message to a mobile device.
FIG. 5 schematically shows how the present invention outputs an anomaly signal to a piece of control equipment.
FIG. 6 shows the process flow of the transmission of anomaly information according to the present invention.

### DETAILED DESCRIPTION OF THE INVENTION

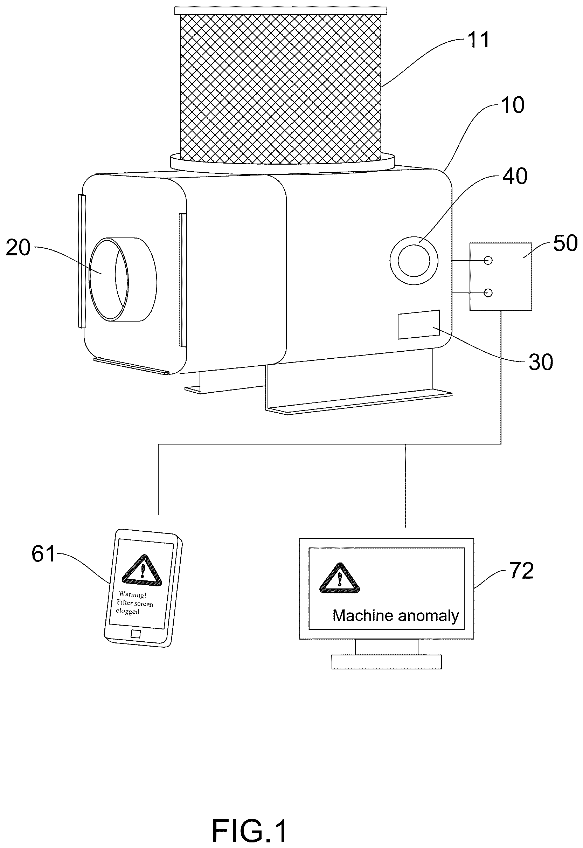

Referring to FIG. 1 to FIG. 6, the remote anomaly-monitoring and indicator-light-based alerting device provided by the present invention for filtration equipment can be applied to, for example, an oil mist recovery machine or an air filtration machine so that by way of pressure difference sensing and remote communication techniques, a machine user is provided with the ease of operation in real-time anomaly identification and remote response.

As shown in FIG. 1, the present invention includes a piece of filtration equipment 10 that is mounted therein with a filter screen 11 and a sensing module 20. The filter screen 11 has a cylindrical shape and is provided in an airflow channel in the equipment. The sensing module 20 is arranged at the air inlet end and air outlet end of the filter screen 11 and is configured to detect pressure difference data. The sensing module may include at least one pressure difference sensor and is expandable to include a temperature sensor, a current sensor, or a working hour module.

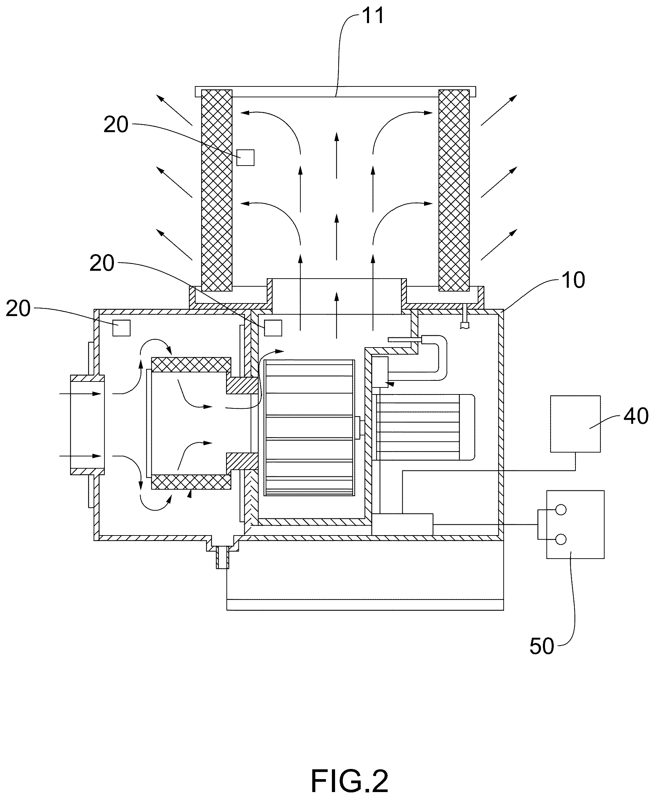

As shown in FIG. 2, the sensing module 20 is not necessarily arranged only inside the filtration equipment 10. To enable sensing with higher precision, the sensing module 20 can be provided in multiple areas including the air inlet end, the inner side of the filter screen, the junction between the interior of the equipment body and the filter screen, and the area around a fan. The oil mist accumulating on the blades of the fan or in the bent/angled portions of a conduit may also cause obstruction or even affect the operation of other parts, resulting in such anomalies as an abnormal rise in the starting voltage. Therefore, the present invention allows the sensing module 20 to be arranged at multiple points to not only monitor the state of the filter screen in real time, but also detect any anomaly of the entire machine, making it possible to notify the user of necessary inspection or maintenance as soon as possible, thereby ensuring stable equipment operation.

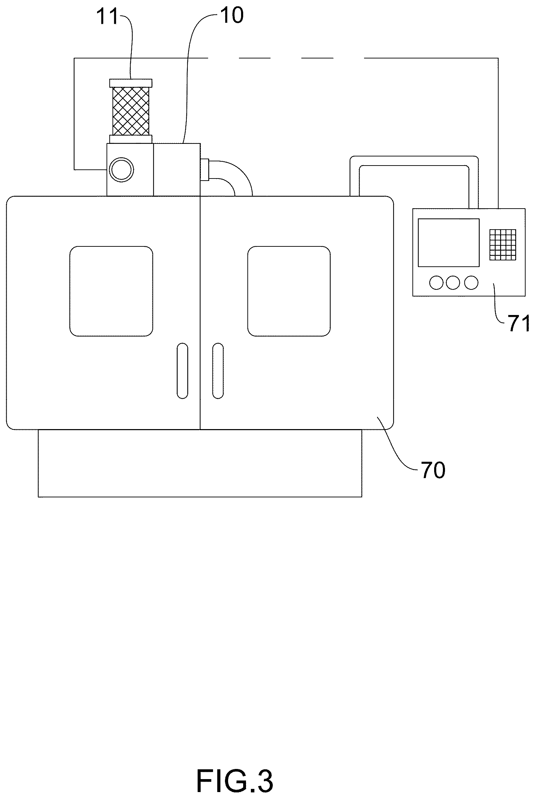

As shown in FIG. 3, the present invention can be applied to a CNC machine 70, with the filtration equipment 10 mounted on top of or inside the CNC machine 70. When the filter screen 11 is in an abnormal state, not only will the LED display unit 40 at the equipment end (illustrated herein as mounted on the equipment housing) emit warning light, but also the input/output (I/O) output interface 52 connecting the filtration equipment to the operation panel 71 of the CNC controller allows the operation panel to display the abnormal state. The abnormal state may even trigger a shutdown response.

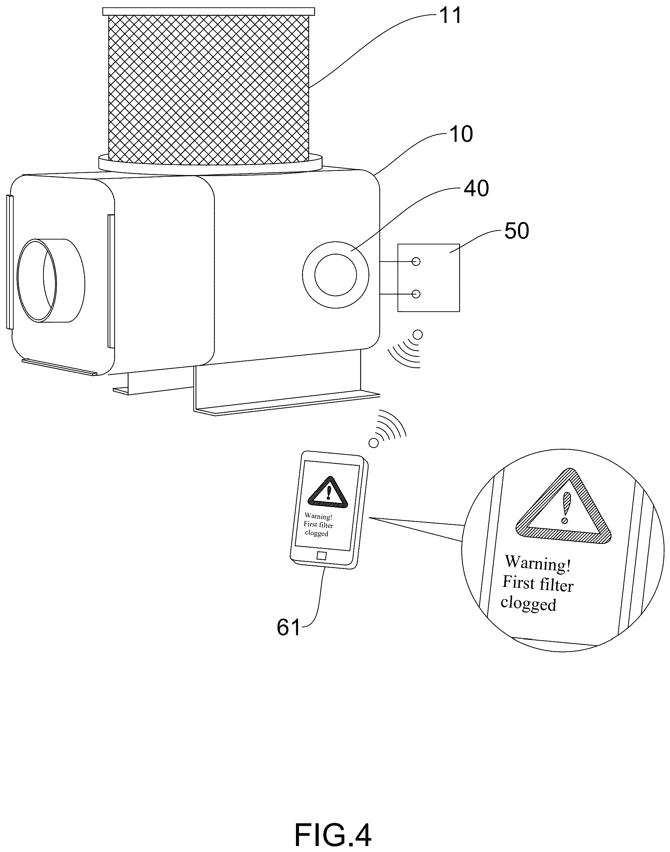

As shown in FIG. 4, the communication module 50 may be a Wi-Fi module. When an anomaly occurs, the control unit 30 drives the communication module in real time to transmit anomaly data to a cloud server for storage. The control unit 30 also pushes the anomaly data to a mobile device 61 (e.g., a mobile phone or tablet computer) simultaneously in order for the mobile device to display an error icon and a text alert, thereby enhancing the efficiency of remote monitoring.

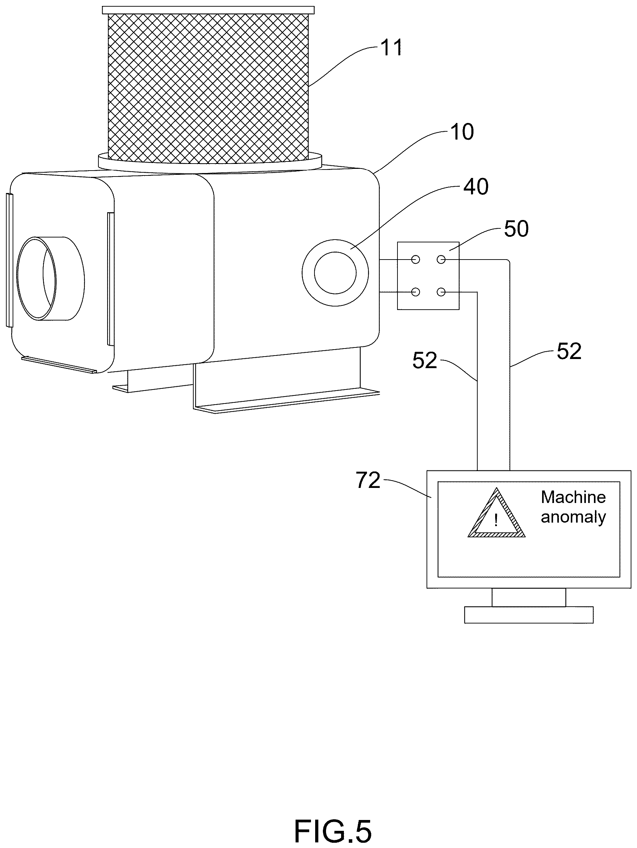

As shown in FIG. 5, the control unit 30 can also transmit an anomaly signal through the I/O output interface 52 to a piece of control equipment 72 (e.g., a programmable logic controller (PLC) or a display screen) so that, when an anomaly occurs, the control equipment 72 will carry out the corresponding response or display an alert image, thereby enabling coordinated anomaly handling between automated equipment.

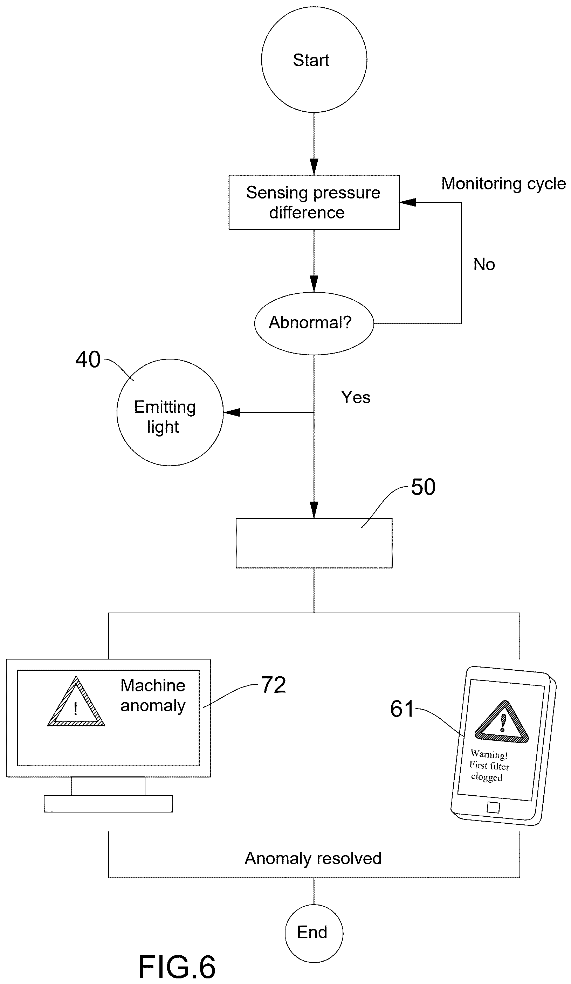

After the filtration equipment is started, referring to FIG. 6, the sensing module begins sensing the pressure difference between the upstream and downstream ends of the filter screen and the related sensing data. The sensing module transmits the detected information to the control unit for data determination and logic operation. If it is determined that the clogging (or another anomaly) of the filter screen has reached the preset threshold value, the control unit will output an anomaly signal in the following three forms: (1) The control unit activates the LED display unit to emit red light as an on-site alert to the anomaly; (2) The control unit transmits an anomaly message through the communication module to a mobile device or a computer system to provide a remote alert and graphical display; and (3) The control unit outputs the corresponding signal through the I/O output interface to external control equipment in order for an automated control system to display an alert image, start a schedule, or perform a shutdown operation.

In addition, the present invention has a modular design architecture. The sensing module can be flexibly added with multiple sensing elements, and the communication module and I/O output interface may use wired or wireless transmission to meet the actual needs for equipment integration. The remote alerting method may involve a graphical alert image alone or in conjunction with displaying anomaly information via a mobile phone application program (App) or industrial control software. The invention is suitable for simultaneous multi-machine monitoring and smart factory application scenarios.

It can be known from the above that the method of use and advantages of the present invention are as follows:
1. When the filter screen 11 becomes abnormal, the sensing module 20 can detect the anomaly in real time, and the LED display unit 40 will emit the corresponding light as an alert, thereby simplifying the operation of on-site anomaly identification.
2. The communication module 50 can simultaneously push anomaly information to a remote mobile device 61 or computer system to increase response efficiency.
3. The control unit 30 can be integrated with the external control equipment 72 through the I/O output interface 52 to realize shutdown control or warning management.
4. A graphical anomaly alert image can be provided via the mobile device 61 or the operation panel 71. This function supports simultaneous display by multiple devices and provides intuitive operation.
5. The sensing module 20 is expandable and can record the working hours of the filter screen 11 as a basis for maintenance schedule preparation.
6. The multi-point layout of the sensing module 20 helps increase the accuracy of detection and is suitable for the filtration equipment 10 and application scenarios with heavy oil mist build-up.
7. The present invention can pre-warn of startup anomalies of the control unit 30 caused by oil mist accumulation inside the filtration equipment 10, thereby helping to prevent the risks of damage and shutdown.
8. Components such as the sensing module 20, the control unit 30, the LED display unit 40, the communication module 50, and the I/O output interface 52 use a modular design that enables highly flexible mounting and adaptability to various types of filtration equipment 10 and to automated working environments.

The constituent structures of the invention have not been seen in any publications or used publicly. Therefore, the requirements for an invention patent application are met. It is the applicant's earnest hope that the application will be thoroughly reviewed and granted as soon as possible.

## Claims

1. A remote anomaly-monitoring and indicator-light-based alerting device for filtration equipment, used to monitor a state of a filter screen of oil mist recovery equipment, the oil mist recovery equipment comprising:
a sensing module provided in the oil mist recovery equipment and having at least one pressure difference sensor for sensing a pressure difference between an upstream end and a downstream end of the filter screen, wherein the sensing module is expandable to include a temperature sensor, a voltage sensor, a current sensor, or an hour meter in order to provide composite sensing information;
a control unit electrically connected to the sensing module and configured for receiving and processing the sensing information and determining according to a preset condition whether or not an anomaly has occurred; and
a display unit electrically connected to the control unit and having a light-emitting diode (LED) indicator light for displaying the state of the filter screen according to a determination result of the control unit, wherein the LED indicator light includes green light corresponding to a normal state, yellow light corresponding to a need for cleaning, and red light corresponding to a need for replacement;
wherein the oil mist recovery equipment is further provided with a communication module, and the communication module is electrically connected to the control unit and is configured for transmitting anomaly information to a remote receiving device in a wired or wireless manner when the anomaly occurs;
wherein upon determining that the anomaly has occurred, the control unit drives the display unit into emission of a corresponding said light and transmits the anomaly information through the communication module to the remote receiving device in order to prompt a user to address the anomaly.

2. The remote anomaly-monitoring and indicator-light-based alerting device for filtration equipment as claimed in claim 1, wherein the remote receiving device is one of a computer, a mobile device, and an automated control system.

3. The remote anomaly-monitoring and indicator-light-based alerting device for filtration equipment as claimed in claim 1, wherein the communication module is a Wi-Fi module and is capable of transmitting the anomaly information through a cloud server to the remote receiving device when the remote receiving device is installed with a necessary application program.

4. The remote anomaly-monitoring and indicator-light-based alerting device for filtration equipment as claimed in claim 1, wherein the display unit has an input/output (I/O) output interface for outputting a control signal corresponding to the emitted light to external equipment.

5. The remote anomaly-monitoring and indicator-light-based alerting device for filtration equipment as claimed in claim 1, wherein the sensing module further comprises a working hour accumulation module for recording an actual usage time of the filter screen.

6. The remote anomaly-monitoring and indicator-light-based alerting device for filtration equipment as claimed in claim 1, wherein the sensing module comprises an ambient temperature sensor for monitoring a temperature of an environment where the oil mist recovery equipment is used, and for issuing an anomaly alert when the temperature exceeds a safe range.

7. The remote anomaly-monitoring and indicator-light-based alerting device for filtration equipment as claimed in claim 1, wherein the remote receiving device has a graphical anomaly-displaying interface for displaying a graphical visual alert corresponding to a level of the anomaly of the filter screen.

8. The remote anomaly-monitoring and indicator-light-based alerting device for filtration equipment as claimed in claim 1, wherein the communication module supports a function of simultaneous transmission to multiple devices and is capable of establishing communication connections with multiple said remote receiving devices through a cloud platform.
